# EUROPÄISCHE PATENTSCHRIFT

(11) **EP 1 149 245 B1**
(45) Veröffentlichungstag und Bekanntmachung des Hinweises auf die Patenterteilung: **04.10.2006**
(21) Anmeldenummer: 00989800.8
(22) Anmeldetag: 23.11.2000
(51) Int. Cl.: F04D 13/06, F04D 29/02

(54) **FLÜSSIGKEITSPUMPE MIT EINEM MOTORGEHÄUSE UND VERFAHREN ZUR HERSTELLUNG EINES MOTORGEHÄUSES**
FLUID PUMP WITH A MOTOR HOUSING AND A METHOD FOR THE PRODUCTION OF A MOTOR HOUSING
POMPE A LIQUIDE PRESENTANT UN BOITIER MOTEUR ET PROCEDE DE REALISATION D'UN BOITIER MOTEUR

(30) Priorität: 24.11.1999 DE 19956380
(43) Veröffentlichungstag der Anmeldung: 31.10.2001
(73) Patentinhaber: ROBERT BOSCH GMBH, 70442 Stuttgart (DE)
(72) Erfinder: LENTZ, Gerd, 77815 Buehl (DE); HEIER, Christoph, 76473 Iffezheim (DE); BASSLER, Juergen, 77830 Buehlertal (DE)
(86) Internationale Anmeldenummer: PCT/DE2000/004143
(87) Internationale Veröffentlichungsnummer: WO 2001/038741

(56) Entgegenhaltungen:
- DE-A- 3 702 028
- US-A- 4 695 419
- PATENT ABSTRACTS OF JAPAN vol. 1995, no. 11, 26. Dezember 1995 (1995-12-26) -& JP 07 208380 A (TGK CO LTD), 8. August 1995 (1995-08-08)

## Beschreibung

### Stand der Technik

Die Erfindung geht aus von einer Flüssigkeitspumpe mit einem Motorgehäuse bzw. einem Verfahren zur Herstellung eines Motorgehäuses für eine Flüssigkeitspumpe nach der Gattung des Anspruchs 1 bzw. des Anspruchs 9. Eine solche Pumpe ist z.B. aus der JP 07 208 380 bekannt.

Das Prinzip der Trennung von Stator und Rotor durch ein Rohr, das es ermöglicht, den Rotor in einem Kühlwasser eingetaucht anzuordnen, ist aus der DE 37 02 028 C2 bekannt.

Eine detailliertere Beschreibung einer solchen Flüssigkeitspumpe ist in der DE 44 11 960 A1 zu finden. Die in dieser Schrift dargestellte Flüssigkeitspumpe besitzt einen glockenförmigen Rotor, in dessen zylindrischen Innenraum der Stator eingreift. Eine rohr- beziehungsweise becherförmige Wandung verläuft zwischen Rotor und Stator, wobei am Boden eines Bechers eine Welle eingelassen ist, um die der Rotor drehbar aufgehängt ist.

Die Verankerung der Welle reicht nur auf einer geringen Tiefe ins Innere des zylindrischen Hohlraums hinein, denn der Platz in diesem wird fast vollständig zur Unterbringung des Stators benötigt. Die zylindrische Wandung zwischen Stator und Rotor ist sehr dünn, um eine geringe Spaltbreite und damit geringe Magnetkreisverluste zu erzielen. Dies beeinträchtigt die Stabilität der Aufhängung des Rotors.

Eine Leiterplatte mit einer Kommutierungsschaltung für die Stromversorgung des Stators kann nur in dessen axialer Verlängerung angeordnet werden und erhöht so eine Einbautiefe der Flüssigkeitspumpe.

Es ist weiterhin in der deutschen Patentanmeldung 199 34 382 vorgeschlagen worden, eine Flüssigkeitspumpe mit einem Motor, der einen Klauenpolstator hat, zu verwenden. Dieser Klauenpolstator besteht aus einer Wicklung und zwei Klauenblechen mit Klauen. Die Einzelteile müssen in mehreren Montageschritten montiert und auf dem Motorgehäuse fixiert werden. Zwischen Klauenpolstator und Motorgehäuse entsteht toleranzbedingt ein Luftspalt, der die Ableitung einer Verlustwärme der Wicklung zu einem in der Flüssigkeitspumpe geförderten Medium und geringe Magnetkreisverluste erschwert.

Aus der JP 07 208380 ist eine Flüssigkeitspumpe mit einem Elektromotor bekannt, welcher einen Klauenpolstator mit Klauen und Klauenblechen aufweist. Die Klauenbleche des Klauenpolstators des antreibenden Elektromotors der JP 07 208380 sind in das nicht magnetische Material des Motorgehäuses dieser Flüssigkeitspumpe eingebettet.

Aus der US 4,695,419 ist ein Miniaturelektromotor mit Klauenpolstator bekannt, wobei die Polzähne des Klauenpoistators bzw. die zugehörigen Klauenbleche mittels eines nicht magnetischen Materials, wie beispielsweise einem synthetischen Harzes oder einem faserverstärkten Kunststoff fixiert und teilweise ummantelt wird, so dass zumindest die dem Rotor des Motors zugewandte Oberfläche der Polzähne offen liegt. Die Polzähne des Klauenpolstators der US 4,695,419 sind somit exakt zueinander und zum Rotor des Elektromotors fixiert und bilden damit einerseits einen wohl definierten Laufzylinder für den Rotor des Motors, ermöglichen aber andererseits durch ihre offen liegenden Oberflächen den gewünschten Magnetfluss zwischen Rotor und Klauenpolstator.

### Vorteile der Erfindung

Die erfindungsgemäße Flüssigkeitspumpe mit einem Motorgehäuse mit den kennzeichnenden Merkmalen des Anspruchs 1 bzw. das Verfahren zur Herstellung eines Motorgehäuses für eine Flüssigkeitspumpe mit den kennzeichnenden Merkmalen des Anspruchs 8 hat demgegenüber den Vorteil, dass auf einfache Art und Weise Betriebseigenschaften verbessert werden und eine Anzahl von Montageschritten verringert wird.

Dies wird insbesondere durch das Einspritzen von Klauenblechen und metallischen Verbindungsteilen erreicht.

Durch Einspritzen von Klauenblechen ergibt sich aufgrund einer luftspaltfreien Wärmeübertragung der Vorteil, dass eine Verlustwärme einer Wicklung und von Klauen an eine in einem Rohr strömende Flüssigkeit besser abzuleiten ist.

Besonders vorteilhaft ist es, die Klauen bzw. Klauenbleche in ein Motorgehäuse einzuspritzen, da dadurch weniger Teile montiert werden müssen.

Es ist vorteilhaft, metallische Verbindungsteile in das Motorgehäuse einzuspritzen, da auch hier die Montage in das Motorgehäuse entfällt und ein Durchgang der Verbindungsteile gleichzeitig gut abgedichtet wird.

Durch die in den abhängigen Ansprüchen aufgeführten Maßnahmen sind vorteilhafte Weiterbildungen und Verbesserungen der in Anspruch 1 genannten Flüssigkeitspumpe möglich.

Weiterhin vorteilhaft ist es, ein Stanzgitter in das Motorgehäuse einzuspritzen, das eine elektrische Verbindung von und zu einer Leiterplatte darstellt, wodurch keine elektrischen Verbindungsleitungen mehr eingelegt und befestigt werden müssen.

Es ist vorteilhaft, den Klauenpolstator so zu umspritzen, dass eine Wärmeabstrahlung der Wicklung im Bereich der zumindest einen Leiterplatte verringert wird, da dadurch Lebensdauer und Betriebsdingung der Leiterplatte verbessert wird.

Es ist vorteilhaft, die Wicklung direkt auf das Motorgehäuse aufzuwickeln, weil dadurch kein zusätzlicher Wicklungsträger verwendet werden muss.

Ein Rückschlussring ist vorteilhafterweise auf das Motorgehäuse montiert.

### Zeichnung

Ein Ausführungsbeispiel der Erfindung ist in der Zeichnung vereinfacht dargestellt und in der nachfolgenden Beschreibung näher erläutert.

Es zeigen
- Figur 1: einen axialen Schnitt durch eine erfindungsgemäße Flüssigkeitspumpe,
- Figur 2: einen axialen Schnitt durch das Motorgehäuse mit Klauenpolen,
- Figur 3: eine räumliche Darstellung von in das Motorgehäuse eingespritzten Klauen.

### Beschreibung eines Ausführungsbeispiels

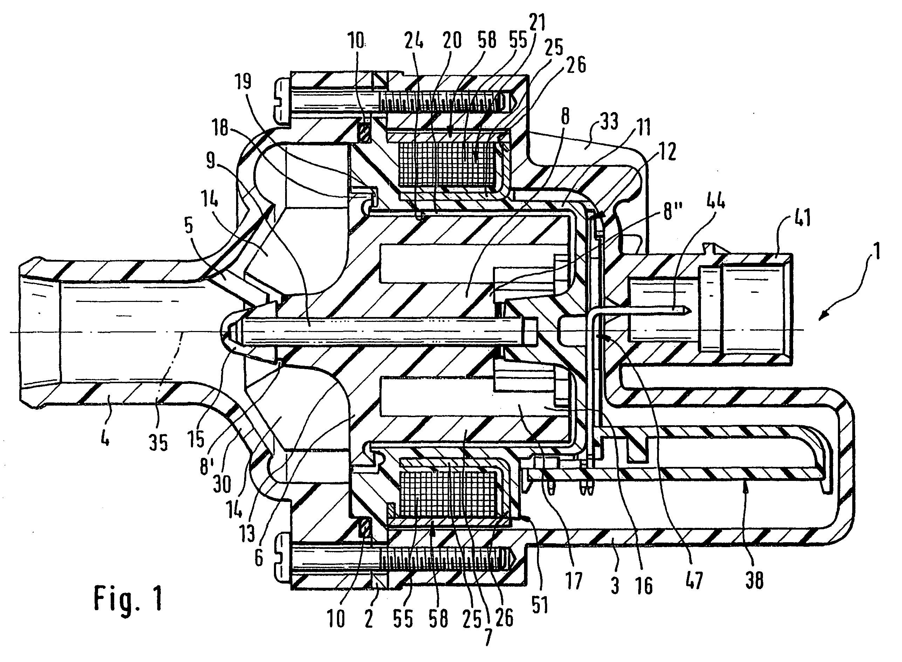

Figur 1 zeigt eine erfindungsgemäße Flüssigkeitspumpe 1 in einem axialen Schnitt.

Die Flüssigkeitspumpe 1 kann beispielsweise als Kühlwasserpumpe oder für einen Heizkreislauf in einem Kraftfahrzeug verwendet werden und hat ein dreiteiliges Pumpengehäuse 33, das aus einem Gehäusevorderteil 30 mit einem daran ausgebildeten Saugstutzen 4 und einem nicht dargestellten Druckstutzen, einem Motorgehäuse 2 und einem Gehäusehinterteil 3 besteht. Das Gehäusevorderteil 30, der Saugstutzen 4, das Motorgehäuse 2 und das Gehäusehinterteil 3 sind aus Kunststoff, wobei der Saugstutzen 4 und das Gehäusehinterteil 3 auch aus einem anderem Material wie z. B. Metall oder Keramik sein kann.

Die Teile 30, 2, 3 sind beispielsweise durch Schrauben zusammengehalten, die das Motorgehäuse 2 zwischen Vorderteil 30 und Hinterteil 3 eingespannt halten. Jede andere Verbindungsart wie z.B. Nieten, Kleben ist möglich. Ein Dichtring 10 ist zwischen Gehäusevorderteil 30 und Motorgehäuse 2 eingeklemmt oder eingespritzt. Das Motorgehäuse 2 besteht aus einem nichtmagnetischen Material und besitzt einen dünnwandigen Abschnitt in Form eines Rohrs 11 mit einer Innenwandung 24. In dem Rohr 11, das zusammen mit einem Boden 12 einen Becher bildet, ist ein Rotor 6 untergebracht.

Der Rotor 6 ist aus einem kunststoffgebundenen Magnetmaterial, zum Beispiel aus in eine Kunstharzmatrix oder Kunststoffmatrix eingebettetem pulverförmigen Magnetmaterial, einstückig, zum Beispiel durch Spritzguß gefertigt und umfaßt einen äußeren Zylinder 7, der mit geringem Abstand dem Verlauf des Rohrs 11 folgt. Der Rotor 6 ist je nach Anwendungsfall entsprechend zwei- oder mehrpolig magnetisiert. Der Rotor 6 dreht sich um eine Drehachse 35, die auch eine Mittellinie des Rotors 6 darstellt.
Der äußere Zylinder 7 ist an seinem dem Ansaugstutzen 4 zugewandten Ende durch eine Stirnwand 13 verschlossen, die eine Mehrzahl von Flügeln 14 trägt.

Ein mit der Stirnwand 13 einstückig verbundener Lagerschaft 8 erstreckt sich durch das Innere des Zylinders 7. Der Lagerschaft 8 ist wenigstens an seinen axialen Enden 8', 8" drehbar um eine ortsfeste Welle 9 gelagert und umschließt sie im Wesentlichen auf ihrer gesamten Länge. Die Länge des Lagerschafts ist wenigstens so groß, daß der Schwerpunkt des Rotors 6 zwischen den zwei Enden 8', 8" liegt. Die Welle 9 ist an einem ersten Ende in einer Aussparung des Bodens 12 durch eine Rändelung drehfest verankert, ihr zweites Ende ist in einer Nabe 15 eines Rippensterns aufgenommen, der mit dem Gehäusevorderteil 30 einstückig ausgebildet ist und von dem nur ein Steg 5 in der Figur 1 gezeigt ist.

Um das Gewicht des Rotors 6 gering zu halten, ist zwischen dem äußeren Zylinder 7 und dem Lagerschaft 8 ein Ringraum 16 vorgesehen, der bis auf einige dünnwandige Rippen 17 leer ist. Die Rippen 17 dienen zur Versteifung der Verbindung zwischen äußerem Zylinder 7 und Lagerschaft 8.

Eine umlaufende Krempe 18 ist am Übergang zwischen dem äußeren Zylinder 7 und der Stirnwand 13 des Rotors angeordnet und greift in eine Ringnut 19 des Motorgehäuses 2 ein, um das Eindringen von festen Verunreinigungen aus dem Kühlwasserstrom in den schmalen Spalt 20 zwischen dem äußeren Zylinder und dem Rohr 11 zu verhindern.

Ein Klauenpolstator 21 erstreckt sich um das Rohr 11. Klauenbleche 26 des Klauenpolstators 21 mit Klauen 25 sind zumindest teilweise integraler Bestandteil des Motorgehäuses 2. Bspw. sind die Klauenbleche 26 in dem Rohr 11 angeordnet. Eine Vorgehensweise zu einer integralen Anordnung wird dadurch erreicht, daß die Klauen 25 bzw. die Klauenbleche 26 zumindest teilweise in das aus Kunststoff bestehende Motorgehäuse 2 eingespritzt werden. Eine andere Vorgehensweise wird durch ein Warmeinbetten der Klauen 25 bzw. der Klauenbleche 26 in den plastifizierten Kunststoff des Motorgehäuses 2 ermöglicht.
Weitere Vorgehensweisen sind möglich.

Um die Klauen 25 herum befindet sich eine Wicklung 55, die wiederum von einem Rückschlußring 58 umgeben ist. Die Wicklung 55 ist bspw. direkt auf das isolierende Motorgehäuse 2 aufgewickelt. Die Wicklung 55 kann aber auch als ein vorgefertigtes Teil am Motorgehäuse 2 angeordnet werden. Ein Wicklungsträger ist dabei nicht notwendig.

Eine Versorgungsschaltung für den Klauenpolstator 21 kann z.B. auf einer bspw. ringförmigen Leiterplatte 38 montiert werden, wodurch sie eine axiale Baulänge der Flüssigkeitspumpe 1 nicht erhöht. Die Leiterplatte 38 erstreckt sich etwa parallel zur Drehachse 35 und ist bspw. im Gehäusehinterteil 3 untergebracht. Weiterhin befindet sich dort ein Anschlußstecker 41 mit zumindest einem metallischen Verbindungsteil 44, das bspw. ein Teil eines Stanzgitters 47 ist. Das Stanzgitter 47 verbindet z.B. einen äußeren Stecker 41 mit der Leiterplatte 38.
Die Leiterplatte 38 ist durch eine bspw. direkt eingespritzte radiale Schutzwand 51 von der Wicklung 55 getrennt, so daß eine Wärmeabstrahlung einer Verlustwärme der Wicklung 55 und der Klauen 25 zur Leiterplatte 38 hin verringert wird. Weitere Befestigungsarten der Schutzwand 51 in dem Motorgehäuse sind möglich.

Die Klauenbleche 25 werden in das Motorgehäuse 2 bspw. eingespritzt, wobei im gleichen Arbeitsgang auch die metallischen Verbindungsteile 44 bspw. als Stanzgitter 47 nach außen und zur Leiterplatte 38 eingespritzt werden.
Das Stanzgitter 47 kann bspw. auch in dem Gehäusehinterteil 3 eingespritzt sein, das in einem seperaten Arbeitsgang hergestellt ist.
Um die Klauen 25 herum wird dann eine Wicklung 55 gewickelt. Dann wird der Rückschlußring 58 montiert.

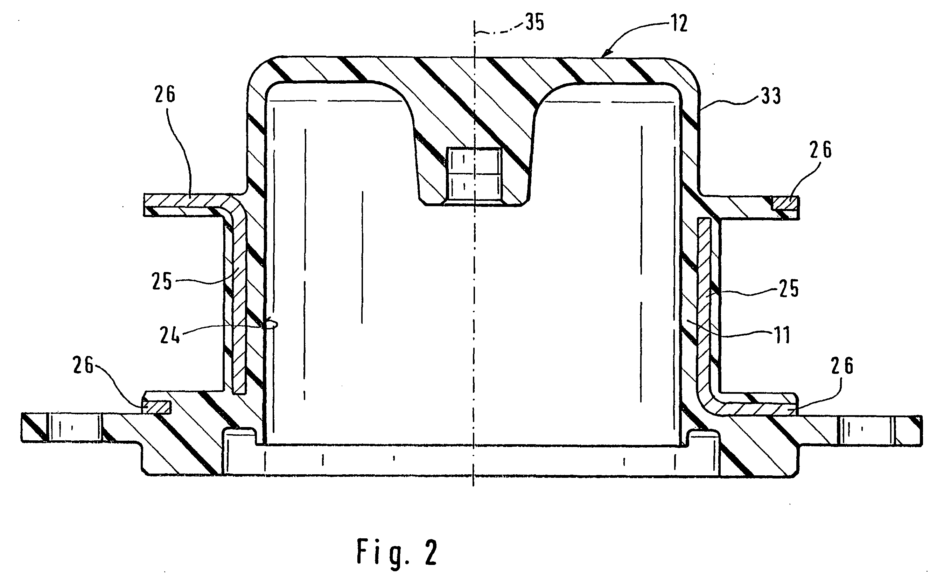

Ein von der Wicklung 55 erzeugtes Magnetfeld greift mit jeweils wechselnder Polarität von den Klauen 25 der zwei Klauenbleche 26 radial nach innen und treibt so den Rotor 6 an, der in Figur 2 nicht dargestellt ist. Die Wicklung 55 ist bifilar aufgebaut, d. h. sie umfaßt zwei getrennt und unabhängig voneinander mit einem Strom beaufschlagbare Kreise. Dies erlaubt es, Magnetfelder mit alternierender Polung zu erzeugen. Ein solcher Klauenpolstator 21 kann mit einer einfacheren Leistungselektronik betrieben werden als ein unifilarer Aufbau.

Ein nicht dargestellter Hallsensor sorgt bspw. für die Kommutierung und kann als Magnetfeldsensor zur Überwachung der Funktion oder der Geschwindigkeit der Flüssigkeitspumpe 1 an einem Ort vorgesehen werden, wo er dem veränderlichen Magnetfeld des rotierenden Rotors 6 ausgesetzt ist.

Figur 2 zeigt einen axialen Querschnitt durch das Motorgehäuse 2 und die Klauenbleche 26 mit den Klauen 25. Für gleiche oder gleichwirkende Teile werden die gleichen Bezugszeichen wie in der Figur 1 verwendet.
Die integrale Anordnung der Klauen 25 in das Motorgehäuse ermöglicht es, einen Abstand der Klauen 25 zu der Innenwandung 24 und damit zum Zylinder 7 des Rotors 6 sehr gering zu halten und so eine Kraftwirkung zwischen Klauenpolstator 21 und Rotor 6 zu erhöhen.
Weiterhin wird die Wärmeeinkopplung der Verlustwärme der Wicklung 55 und der Klauen in die Flüssigkeit erhöht und damit die Kühlung verbessert, so daß dessen Betriebstemperatur und eine Abstrahlung in Richtung der Leiterplatte 38 gesenkt wird.

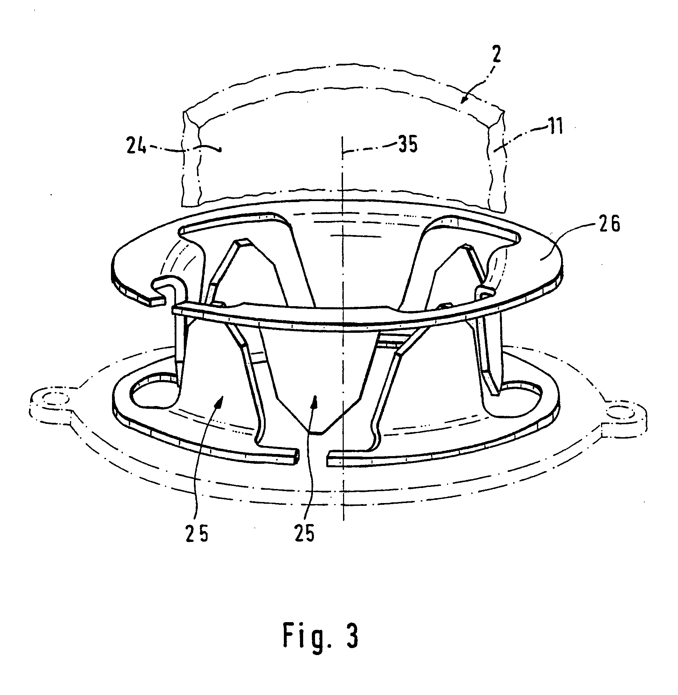

Figur 3 zeigt eine räumliche Darstellung von Klauen 25, die integraler Bestandteil des Motorgehäuses 2 sind. Für gleiche oder gleichwirkende Teile werden die gleichen Bezugszeichen wie in den bisherigen Figuren verwendet.
Von dem Motorgehäuse 2 ist nur ein Teil gezeigt und ist gestrichelt gezeichnet.

Der Klauenpolstator 21 umfaßt zwei Klauenbleche 26 von jeweils identischer Gestalt, mit einem umlaufenden äußeren Ring und einer Mehrzahl von Klauen 25 an jedem Klauenblech 26, die ausgehend von einem Rand des Klauenblechs 26 radial nach innen und dann in Richtung zum gegenüberliegenden Rand gebogen sind. Die Klauen 25 erstrecken sich bspw. trapezförmig zulaufend in axialer Richtung. Hierdurch wird eine Verbesserung des Wirkungsgrades des Motors erreicht. Die Klauenbleche 26 sind so ineinander geschachelt, daß die Klauen 25 des einen Klauenbleches 26 in Lücken zwischen Klauen 25 des anderen Klauenbleches 26 jeweils mit Abstand in Umfangsrichtung ragen und die sich in radialer Richtung erstreckenden Ränder der Klauenbleche in axialer Richtung zueinander beabstandet sind.

Die Klauen 25 werden im Innern zur Innenwandung 24 hin durch den Kunststoff des Rohrs 11 vollständig abgedeckt. In radialer Richtung gesehen weiter außen sind die Klauen 25 bspw. ebenfalls von Kunststoff umgeben. Sie können dort aber auch frei liegen.
Die Klauenbleche 26 bilden einen ringförmigen Hohlraum, in den die Wicklung 55 bspw. gewickelt wird.

## Patentansprüche

1. Flüssigkeitspumpe (1), insbesondere für den Kühl- oder Heizkreislauf eines Kraftfahrzeugs, mit einem Pumpengehäuse (33) und einen Motorgehäuse (2), mit einem Klauenpolstator (21) und einem von dem Klauenpolstator (21) durch ein Rohr (11) getrennten, in der Flüssigkeit eingetauchten und wenigstens ein Flügelrad aufweisenden Innenrotor (6), **dadurch gekennzeichnet, dass** das Motorgehäuse (2) aus Kunststoff ist, und dass der Klauenpolstator (21) Klauenbleche (26) hat, die in das Motorgehäuse (2) zumindest teilweise eingespritzt sind, so dass diese zumindest teilweise integraler Bestandteil des Motorgehäuses (2) sind, und dass das Pumpengehäuse (33) der Flüssigkeitspumpe (1) ein Gehäusehinterteil (3) hat, wobei in das Motorgehäuse (2) oder das Gehäusehinterteil (3) metallische Verbindungsteile (44) eingespritzt sind, die eine elektrische Verbindung zwischen einem Innern und einem Äußeren des Pumpengehäuses (33) herstellen.

2. Flüssigkeitspumpe nach Anspruch 1, **dadurch gekennzeichnet, dass** die Flüssigkeitspumpe (1) zumindest eine Leiterplatte (38) zur Halterung elektronischer Bauelemente für eine Steuerung hat, und dass in das Motorgehäuse (2) oder das Gehäusehinterteil (3) wenigstens ein Stanzgitter (47) für eine elektrische Verbindung von und zu der zumindest einen Leiterplatte (38) eingespritzt ist.

3. Flüssigkeitspumpe nach zumindest einem der Ansprüche 1 oder 2, **dadurch gekennzeichnet, dass** der Klauenpolstator (21) eine Wicklung (55) und Klauen (25) hat, und dass im Motorgehäuse (2) die Klauen (25) in der Nähe einer inneren Wandung (24) des Rohrs (11) verlaufen und eine Verlustwärme der Wicklung (55) und Klauen (25) an die in dem Rohr (91) strömende Flüssigkeit gut ableitbar ist.

4. Flüssigkeitspumpe nach Anspruch 3, **dadurch gekennzeichnet, dass** die Klauen (25) der Klauenbleche (26) zu der Innenwandung (24) des Pumpengehäuses (33) hin durch den Kunststoff des Rohrs (11) vollständig abgedeckt sind.

5. Flüssigkeitspumpe nach Anspruch 3 oder 4, **dadurch gekennzeichnet, dass** das Motorgehäuse (2) so gestaltet ist, dass eine Wärmeabstrahlung der Wicklung (55) des Klauenpoistators (21) zu der zumindest einen Leiterplatte (38) hin durch eine Schutzwand (51) verringert wird.

6. Flüssigkeitspumpe nach Anspruch 4 oder 5, **dadurch gekennzeichnet, dass** die Wicklung (55) auf das Motorgehäuse (2) gewickelt ist.

7. Flüssigkeitspumpe nach einem oder mehreren der Ansprüche 4 bis 6, **dadurch gekennzeichnet, dass** im Bereich der Wicklung (55) ein Rückschlussring (58) auf das Motorgehäuse (2) montiert ist.

8. Verfahren zur Herstellung eines Motorgehäuses (2) für eine Flüssigkeitspumpe (1), insbesondere für den Kühl- oder Heizkreislauf eines Kraftfahrzeugs, wobei die Flüssigkeitspumpe (1) einen Klauenpolstator (21) und einen von dem Klauenpolstator (21) durch ein Rohr (11) getrennten, in der Flüssigkeit eingetauchten und ein Flügelrad aufweisenden Innenrotor (6) hat, **dadurch gekennzeichnet, dass** das Motorgehäuse (2) durch Kunststoffspritzen hergestellt wird und beim Spritzen des Motorgehäuses (2) aus Kunststoff Klauenbleche (26), die Klauen (25) haben, metallische Verbindungsteile (44), und wenigstens ein Stanzgitter (47) in das Motorgehäuse (2) mit eingespritzt werden, dann eine Wicklung (55) auf das Motorgehäuse (2) im Bereich der Klauen (25) gewickelt oder in das Motorgehäuse (2) im Bereich der Klauen (25) eingelegt wird und dann ein Rückschlussring (58) über die Wicklung (55) montiert wird.

## Claims

1. Fluid pump (1), in particular for the cooling or heating circuit of a motor vehicle, having a pump housing (33) and a motor housing (2), having a claw-pole stator (21) and an inner rotor (6) which is separated from the claw-pole stator (21) by a tube (11), is immersed in the fluid and has at least one impeller wheel, **characterized in that** the motor housing (2) is made from plastic, and **in that** the claw-pole stator (21) has metal claw plates (26) which are at least partially injection-moulded into the motor housing (2) so that they are at least partially an integral constituent of the motor housing (2), and **in that** the pump housing (33) of the fluid pump (1) has a rear housing part (3), wherein metallic connecting parts (44) are injection-moulded into the motor housing (2) or the rear housing part (3), said metallic connecting parts (44) providing an electrical connection between an interior and an exterior of the pump housing (33).

2. Fluid pump according to Claim 1, **characterized in that** the fluid pump (1) has at least one printed circuit board (38) for holding electronic components for a controller, and **in that** at least one punched grid (47) is injection-moulded into the motor housing (2) or the rear housing part (3) for an electrical connection from and to the at least one printed circuit board (38).

3. Fluid pump according to at least one of Claims 1 or 2, **characterized in that** the claw-pole stator (21) has a winding (55) and claws (25), and **in that**, in the motor housing (2), the claws (25) run in the vicinity of an inner wall (24) of the tube (11), and waste heat from the winding (55) and claws (25) can be dissipated well to the fluid flowing in the tube (11).

4. Fluid pump according to Claim 3, **characterized in that** the claws (25) of the metal claw plates (26) are completely covered towards the inner wall (24) of the pump housing (33) by the plastic of the tube (11).

5. Fluid pump according to Claim 3 or 4, **characterized in that** the motor housing (2) is designed in such a way that a discharge of heat from the winding (55) of the claw-pole stator (21) to the at least one printed circuit board (38) is reduced by means of a protective wall (51).

6. Fluid pump according to Claim 4 or 5, **characterized in that** the winding (55) is wound on the motor housing (2).

7. Fluid pump according to one or more of Claims 4 to 6, **characterized in that** a return ring (58) is mounted on the motor housing (2) in the region of the winding (55).

8. Method for producing a motor housing (2) for a fluid pump (1), in particular for the cooling or heating circuit of a motor vehicle, wherein the fluid pump (1) has a claw-pole stator (21) and an inner rotor (6) which is separated from the claw-pole stator (21) by a tube (11), is immersed in the fluid and has an impeller wheel, **characterized in that** the motor housing (2) is produced by means of plastic injection moulding, and when the motor housing (2) is injection-moulded from plastic, metal claw plates (26), metallic connecting parts (44) and at least one punched grid (47) are also integrally formed into the motor housing (2), said metal claw plates (26) having claws (25), then a winding (55) is wound on the motor housing (2) in the region of the claws (25) or is placed in the motor housing (2) in the region of the claws (25), and then a return ring (58) is mounted over the winding (55).

## Revendications

1. Pompe à liquide (1), notamment pour le circuit de refroidissement ou de chauffage d'un véhicule automobile comportant un boîtier de pompe (33) et un carter de moteur (2), un stator à griffes polaires (21) et un rotor intérieur (6) séparé du stator à griffes polaires (21) par un tuyau (11), ce rotor étant immergé dans le liquide et comportant au moins un rotor à ailettes,
**caractérisée en ce que**
le carter de moteur (2) est en matière plastique et le stator à griffes polaires (21) comporte des tôles de griffes (26) intégrées par injection au moins en partie dans le carter de moteur (2) pour faire au moins partiellement partie intégrante du carter de moteur (2), et
le boîtier de pompe (33) de la pompe à liquide (1) possède une partie arrière (3),
le carter de moteur (2) ou la partie arrière (3) du boîtier comporte des pièces de liaison métalliques (44) intégrées par injection, réalisant la liaison électrique entre l'intérieur et l'extérieur du boîtier de pompe (33).

2. Pompe à liquide selon la revendication 1,
**caractérisée en ce qu'**
elle comporte au moins une plaque de circuit (38) portant des composants électroniques de la commande, et
le carter de moteur (2) ou la partie arrière de boîtier (3) comporte au moins une grille emboutie (47), intégrée par injection pour assurer la liaison électrique avec au moins la plaque de circuit (38).

3. Pompe à liquide selon au moins l'une des revendications 1 ou 2,
**caractérisée en ce que**
le stator à griffes polaires (21) comporte un enroulement (55) et des griffes (25), et
les griffes (25) passent dans le boîtier de moteur (2) à proximité de la paroi intérieure (24) du tuyau (11) et permettent d'évacuer la chaleur dégagée par l'enroulement (55) et les griffes (25) par le liquide passant dans le tuyau (11).

4. Pompe à liquide selon la revendication 3,
**caractérisée en ce que**
les griffes (25) des tôles à griffes (26) sont complètement couvertes du côté de la paroi intérieure (24) du boîtier de pompe (33) par la matière plastique du tuyau (11).

5. Pompe à liquide selon l'une des revendications 3 ou 4,
**caractérisée en ce que**
le boîtier de moteur (2) est conçu pour réduire le rayonnement thermique de l'enroulement (55) du stator à griffes polaires (21) vers au moins une plaque de circuit (38) par une cloison protectrice (51).

6. Pompe à liquide selon l'une des revendications 4 ou 5,
**caractérisée en ce que**
l'enroulement (55) est porté par le carter (2) du moteur.

7. Pompe à liquide selon l'une des revendications 4 à 6,
**caractérisée en ce qu'**
une bague de court-circuit (58) est installée sur le carter de moteur (2) au niveau de l'enroulement (55).

8. Procédé de fabrication d'un carter de moteur (2) d'une pompe à liquide (1), notamment pour le circuit de refroidissement ou de chauffage d'un véhicule selon lequel,
La pompe à liquide (1) comporte un stator à griffes polaires (21) et un rotor intérieur (6) séparé du stator à griffes polaires (21) par un tuyau (11), ce rotor plongeant dans le liquide et comportant une roue à ailettes,
**caractérisé en ce que**
le carter de moteur (2) est fabriqué par injection en matière plastique et lorsqu'on injecte le carter de moteur (2) en matière plastique, on intègre par injection les tôles à griffes (26), les griffes (25), les pièces de liaison métalliques (44) et au moins une grille emboutie (47) dans le carter de moteur (2), puis, on réalise un enroulement (55) sur le carter de moteur (2) au niveau des griffes (25) ou on insère dans le carter de moteur (2) au niveau des griffes (25) et ensuite on installe une bague de court-circuit (58) sur l'enroulement (55).
